# EUROPÄISCHE PATENTSCHRIFT

(11) **EP 1 498 060 B1**
(45) Veröffentlichungstag und Bekanntmachung des Hinweises auf die Patenterteilung: **20.12.2006**
(21) Anmeldenummer: 04405400.5
(22) Anmeldetag: 29.06.2004
(51) Int. Cl.: A47J 31/60, B01D 35/30, B01D 24/18

(54) **Filterpatrone für wasserbehälter von kaffeemaschinen**
Filter cartridge for water reservoir of coffee apparatus
Cartouche filtrante pour réservoir d'eau d'une cafetière

(30) Priorität: 17.07.2003 CH 12492003
(43) Veröffentlichungstag der Anmeldung: 19.01.2005
(73) Patentinhaber: Saeco IPR Limited, Dublin 12 (IE)
(72) Erfinder: Vetterli, Heinz, 8855 Wangen (CH)
(74) Vertreter: Rottmann, Maximilian

(56) Entgegenhaltungen:
- DE-A1- 3 014 493
- DE-A1- 3 828 008
- FR-A5- 2 102 655
- RU-C1- 2 163 829
- US-B1- 6 383 375

## Beschreibung

Die Erfindung betrifft eine nach dem Oberbegriff ausgestaltete Filterpatrone für Wasserbehälter von Kaffeemaschinen. Eine derartige Filterpatrone dient dem Enthärten von Wasser, welches aus dem Wasserbehälter entnommen und zum Aufbrühen des Kaffeepulvers verwendet wird. Als Enthärtermedium kann beispielsweise ein lonentauscherharz Verwendung finden. Sobald das Enthärtermedium in der Wirkung nachlässt, sollte die Filterpatrone ersetzt werden.

Aus der DE 197 17 054 ist ein Wasserbehälter mit einer gattungsgemässen Filterpatrone bekannt. Die im Innern des Wasserbehälters auswechselbar angeordnete Filterpatrone ist zylindrisch ausgebildet und auf der Unterseite mit einer Wassereintrittsöffnung versehen. Von dieser Wassereintrittsöffnung führt eine einen Durchgang für das Wasser bildende Kammer nach oben. Im Innern der Filterpatrone ist zudem zentral eine absteigende Leitung angeordnet, welche von oben nach unten zum Auslass der Filterpatrone führt. Durch diese Gestaltung soll sichergestellt werden, dass die das Filtermedium enthaltende Kammer vom Wasser im Aufstrom, d.h. von unten nach oben durchströmt wird, so dass Bettverdichtungen mit erhöhtem Fliesswiederstand und Kanalbildung vermieden werden.

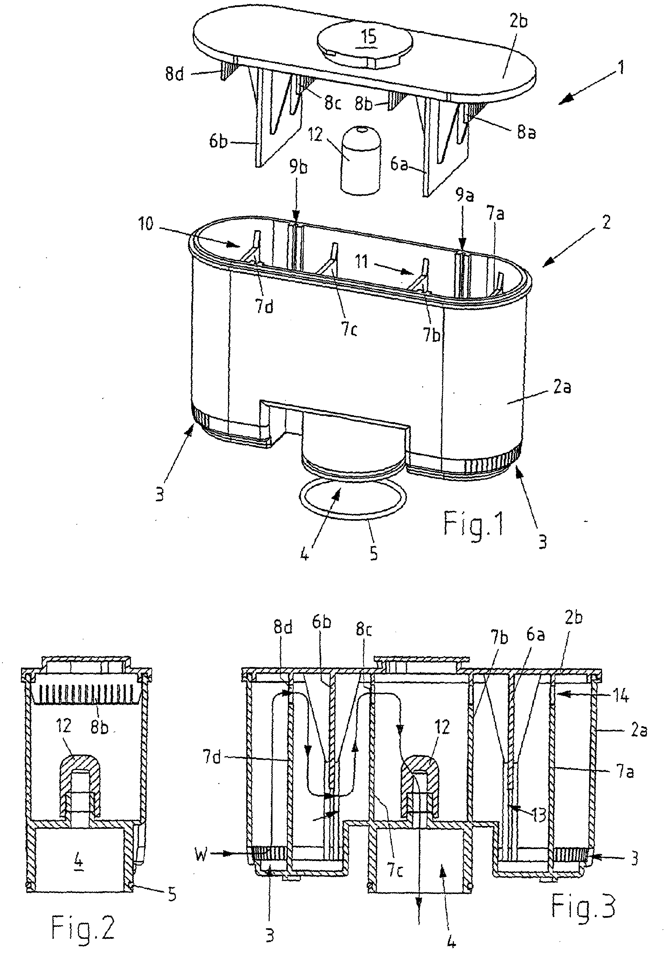

Aus der EP 0 956 129 eine Vorrichtung zur Reinigung einer Flüssigkeit bekannt, die mit mehreren zylindrischen Kartuschen versehen ist. Beim dem zum damaligen Stand der Technik gehörenden Ausführungsbeispiel gemäss der Fig. 1 sind vier Kartuschen mittels einem Plattenpaar zu einer Kartuscheneinheit verbunden. Das Plattenpaar ist mit Kanälen im Sinne von Überströmkanälen versehen, über welche die einzelnen Kartuschen hydraulisch derart miteinander verbunden werden, dass das Wasser vom Einlass seriell durch die vier Kartuschen zum Auslass strömt. Sowohl der Einlass wie auch der Auslass sind oben angeordnet. Im weiteren sind in dieser Schrift Ausführungsbeispiele offenbart, bei denen das Wasser die jeweilige Kartusche immer in der gleichen Richtung, d.h. von oben nach unten, durchströmt.

In der DE 30 14 493 A1 ist eine mit einem Wasservorratsbehälter versehene Filterkaffeemaschine offenbart, welche mit einer auf den Boden des Wasservorratsbehälters aufgelegten, als Formkörper bezeichneten Filterpatrone versehen ist. Die Filterpatrone ist in ihrer äusseren Formgebung an den jeweiligen Wasserbehälter angepasst und mit einer Filtermasse bestehend aus einem Ionenaustauscherharz, Aktivkohlepartikeln sowie keimtötenden Zusätzen gefüllt. Bei einigen Ausführungsbeispielen der Filterpatrone sind zwischen deren Ein- und Auslass Schikanen vorgesehen, welche die Verweilzeit des Wassers in der Filterpatrone verlängern sollen. Bei all diesen Ausführungsbeispielen verlaufen die Schikanen jedoch horizontal, wodurch die Gefahr von Bettbildungen und Bettverdichtungen mit erhöhtem Fliesswiderstand und Kanalbildung besteht, was letztlich zu einem schlechten Wirkungsgrad in Bezug auf die Nutzung der in der Filterpatrone aufgenommenen Filtermasse führt. Zudem ist der Einlass jeweils auf der Oberseite der Filterpatrone angeordnet. Dies hat u.a. den Nachteil, dass der Wasserbehälter nur dann zumindest annähernd vollständig entleert werden kann, wenn die Filterpatrone in ihrer äusseren Formgebung an den jeweiligen Wasserbehälter angepasst ist, so dass keine Toträume zwischen der Aussenseite der Filterpatrone und der Innenseite des Wasserbehälters verbleiben.

Aus der US 417 070 A ist ein Filter bekannt, das in seinem Innern vertikal verlaufende Schikanen zur Verlängerung des Wasserlaufs aufweist. Auch in diesem Fall ist der Einlass auf der Oberseite des Filters angeordnet, was zu den bereits vorgängig erwähnten Nachteilen führt. Zudem werden von den drei Teilstrecken, welche das Wasser vom Einlass bis zum Auslass zurückzulegen hat, deren zwei von oben nach unten durchströmt.

Aus der US 6,387,260 B1 ist eine Filtervorrichtung zur Reinigung von Flüssigkeiten bekannt. Die Filtervorrichtung besteht aus einem Hauptgefäss in das von oben Behälter eingesetzt ist. Letzterer ist am Boden mit einer Vertiefung zur Aufnahme einer Filterpatrone versehen. Die zylindrisch ausgebildete Filterpatrone ist mit einer zentralen, rohrförmigen Leitung versehen, deren oberes Ende in einen Hohlraum mündet. Am Boden der Filterpatrone sind Öffnungen angeordnet, durch welche die zu reinigende Flüssigkeit in die Filterpatrone einströmen kann. Das zu reinigende Wasser wird in den Behälter eingefüllt. Sobald das in den Behälter eingefüllte Wasser einen vorgegebenen Level erreicht hat und sich das Füllniveau oberhalb des Hohlraums der Filterpatrone befindet, beginnt der Reinigungsprozess den Gesetzen der Physik folgend, indem das Wasser durch die Filterpatrone hindurch strömt, diese über die zentrale, rohrförmige Leitung verlässt um danach nach unten in das Hauptgefäss einzuströmen. Dabei strömt kontinuierlich solange Wasser in die Filterpatrone nach, bis der obere Behälter entleert ist und das Hauptgefäss mit dem gereinigten Wasser gefüllt ist.

Schliesslich ist aus der DE 3828008 eine weitere gattungsgemässe Filtervorrichtung bekannt.

Ausgehend von einem Stand der Technik wie er aus der DE 30 14 493 A bekannt ist liegt der Erfindung die Aufgabe zugrunde, die Filterpatrone derart zu verbessern, dass sie bei kompakten Abmessungen einen hohen Wirkungsgrad besitzt, indem das in der Filterpatrone aufgenommene Filtermedium optimal genutzt wird, wobei insbesondere Bettbildungen und Bettverdichtungen innerhalb der Filterpatrone vermieden werden sollen und wobei das nutzbare Volumen des Wassertanks, in welchen die Filterpatrone eingesetzt wird, nicht nennenswert herabgesetzt werden soll.

Diese Aufgabe wird durch die im Kennzeichen des Anspruchs 1 angeführten Merkmale gelöst.

Indem die Schikanen im wesentlichen vertikal verlaufen und wechselweise am Unterteil bzw. Oberteil angeordnet sind und zwischen der jeweiligen Schikane und dem Ober- bzw. Unterteil jeweils ein Durchlass für das Wasser freibleibt, wird die Gefahr von Bettbildungen und Bettverdichtungen weitgehend vermieden. Das Anordnen des Einlasses im unteren Bereich der Filterpatrone bringt den weiteren Vorteil mit sich, dass die erste, durch die jeweilige Schikane begrenzte Kammer der Filterpatrone im Aufstrom durchströmt wird und dass praktisch der gesamte Inhalt des jeweiligen Wasserbehälters, in welchen die Filterpatrone eingesetzt ist, genutzt werden kann.

Bevorzugte Ausführungsbeispiele der Erfindung sind in den abhängigen Ansprüchen 2 bis 9 definiert.

Nachfolgend wird ein Ausführungsbeispiel der Erfindung anhand einer Zeichnung näher erläutert. Dabei zeigt:
- Fig. 1: eine perspektivische Ansicht der Filterpatrone mit angehobenem Oberteil;
- Fig. 2: einen Querschnitt durch die Filterpatrone, und
- Fig. 3: einen Längsschnitt durch die Filterpatrone.

Die gesamthaft mit 1 bezeichnete Filterpatrone ist zum Einsetzen in den Wasserbehälter einer Kaffeemaschine vorgesehen, wobei weder die Kaffeemaschine noch der Wassertank dargestellt sind. In der Fig. 1 ist die Filterpatrone 1 in einer perspektivischen Ansicht dargestellt, während die Fig. 2 einen Querschnitt und die Fig. 3 einen Längsschnitt durch die Filterpatrone 1 zeigt. Die Filterpatrone 1 weist ein aus einem Unterteil 2a und einem Oberteil 2b bestehendes Gehäuse 2 auf. Der in der Fig.1 vom Unterteil 2a abgehobene Oberteil 2b wird beim Zusammenbauen des Gehäuses 2 dicht mit dem Unterteil 2a verbunden, vorzugsweise durch Verkleben oder Verschweissen. Natürlich sind auch lösbare Verbindungen wie Klemmverschlüsse, Schraubverbindungen und dergleichen möglich. Der Gehäuseunterteil 2a ist im unteren Bereich auf beiden Stirnseiten mit einer Vielzahl von schlitzförmigen Ausnehmungen zur Bildung von seitlichen Einlässen 3 versehen. Ein zylindrischer Auslass 4 ist auf der Gehäuseunterseite zentral angeordnet. Der Auslass 4 kann mit einem Rückschlagventil (nicht dargestellt) versehen sein, welches beim Einsetzen der Filterpatrone 1 in den Wassertank geöffnet wird. Um etwaige Schmutzpartikel wie auch das darin aufgenommene, granulatförmige lonentauscherharz (nicht dargestellt) am Austreten aus der Filterpatrone 1 zu hindern, ist ein aus einem porösen Material bestehendes Filter 12 vorgesehen, welches über dem Auslass 4 angebracht wird. Im weiteren ist eine Dichtung in Form eines O-Rings 5 vorgesehen, die auf der Aussenseite des Auslasses angeordnet wird und eine dichte Verbindung zwischen dem Wasserauslass des Wasserbehälters und der Filterpatrone 1 sicherstellt.

Sowohl am Oberteil 2b wie auch am Unterteil 2a sind Schikanen 6a, 6b; 7a, 7b, 7c, 7d in Form von Stegen angeordnet. Diese Schikanen 6a, 6b; 7a, 7b, 7c, 7d erstrecken sich über die gesamte Innenbreite des Gehäuses 2 und bilden darin Kammern. Die am Unterteil 2a angeordneten Schikanen 7a, 7b, 7c, 7d erstrecken sich nicht bis an die Oberseite des Unterteils 2a, so dass jeweils ein Schlitz 10, 11 freibleibt, über welchen das Wasser an der jeweiligen Schikane 7b, 7d vorbei von der einen in die andere Kammer der Filterpatrone 1 einströmen kann. Die am Oberteil 2b angeordneten Schikanen 6a, 6b sind derart dimensioniert, dass sie sich bei auf das Unterteil 2a aufgesetztem Oberteil 2b nicht bis an den Boden des Unterteils 2a erstrecken, so dass ebenfalls jeweils ein Schlitz freibleibt, über welchen das Wasser an der jeweiligen Schikane 6a, 6b vorbei von der einen in die andere Kammer der Filterpatrone 1 einströmen kann.

In die Seitenwände des Unterteils 2a sind Nuten 9a, 9b eingelassen, welche zur seitlichen Aufnahme und Führung der jeweiligen, am Oberteil 2b angeordneten Schikanen 6a, 6b vorgesehen sind. Diese Nuten 9 sollen insbesondere sicherstellen, dass die jeweilige Schikane 6a, 6b seitlich abgedichtet ist und kein hydraulischer Kurzschluss entstehen kann, bei welchem das Wasser unter Umgehung der jeweiligen Schikane 6a, 6b seitlich an dieser vorbeiströmen und die Wirkung der Filterpatrone herabsetzen könnte.

Das über die Einlässe 3 in die Filterpatrone 1 einströmende Wasser durchströmt die erste Kammer von unten nach oben im Aufstrom, während die nachfolgende Kammer von oben nach unten durchströmt wird. Die nachfolgende dritte Kammer wird dann wieder im Aufstrom durchströmt, während die zentrale, in den Auslass 4 mündende vierte Kammer wieder von oben nach unten durchströmt wird. Von den vier Kammern, welche das Wasser vom jeweiligen Einlass 3 bis zum Auslass 4 durchströmt, werden demnach jeweils zwei Kammern von unten nach oben und zwei von oben nach unten durchströmt. Durch die insgesamt sechs Schikanen 6a, 6b; 7a, 7b, 7c, 7d wird der Innenraum der Filterpatrone 1 insgesamt in sieben Kammern unterteilt und erreicht, dass das von den beiden seitlichen Einlässen 3 zum zentralen Auslass 4 der Filterpatrone 1 strömende Wasser einen relativ langen Weg innerhalb der Filterpatrone 1 zurücklegen muss. Durch diese Gestaltung ist die Verweilzeit des durch die Filterpatrone 1 strömenden Wassers vergleichsweise hoch und es kann eine Bettbildung und Bettverdichtung vermieden werden, was letztlich zu einer optimalen Ausnutzung des in der Filterpatrone aufgenommenen lonentauscherharzes führt und einen hohen Wirkungsgrad in Bezug auf die Wasserenthärtung ergibt. Der Lauf des Wassers vom linken Einlass 3 zum zentralen Auslass 4 ist in der Fig. 3 in Form einer mit Pfeilen versehene Linie W angedeutet. Indem die Einlässe 3 unten an der Filterpatrone 1 angeordnet sind, kann der Wassertank über die Filterpatrone 1 praktisch vollständig entleert werden und zwar auch dann, wenn die Filterpatrone 1 in ihrer äusseren Formgebung nicht an den jeweiligen Wasserbehälter angepasst ist. Das nutzbare Volumen des Wasserbehälters wird durch den Einsatz einer solchen Filterpatrone auch nicht nennenswert herabgesetzt.

Es versteht sich, dass die Anzahl, Ausbildung und Anordnung der Schikanen 6a, 6b; 7a, 7b, 7c, 7d durchaus von dem gezeigten Ausführungsbeispiel abweichen kann. Vor dem Aufsetzen des Oberteils 2b wird der Innenraum der Filterpatrone 1 bis ca. an die Oberkante der am Unterteil 2a befestigten Schikanen 7a, 7b, 7c, 7d mit dem in Granulatform vorliegenden lonentauscherharz zum Enthärten des Wassers gefüllt. Um zu verhindern, dass über die oberen Schlitze 10, 11 Granulatkörner des lonentauscherharzes von der einen in die andere Kammer der Filterpatrone 1 gelangen können, sind am Oberteil 2b wasserdurchlässige Rückhalteorgane in Form von Rechen 8a, 8b, 8c, 8d angeordnet, welche sich bei auf das Unterteil 2a aufgesetztem Oberteil 2b in Richtung der jeweiligen Oberseite der am Unterteil 2a angeordneten Schikanen 7a, 7b, 7c, 7d erstrecken und die genannten Schlitze 10, 11 weitgehend ausfüllen. Vorzugsweise verbleibt zwischen der Oberseite der jeweiligen Schikane 7a, 7b, 7c, 7d und der Unterseite des jeweiligen Rechens 8a, 8b, 8c, 8d ein schmaler Spalt, über welchen Wasser nicht jedoch Granulatkörner des lonentauscherharzes durchtreten kann/können. Aus dem Querschnitt gemäss Fig. 2 ist der eine Rechen 8b ersichtlich.

Die lichte Öffnungsweite der schlitzförmigen Ausnehmungen zur Bildung der beiden Einlässe 3 wie auch die in die Rechen 8a, 8b, 8c, 8d eingelassenen Schlitze sind so gewählt, dass diese enger sind als der statistisch mittlere Aussen-Durchmesser eines einzelnen Granulatkorns, vorzugsweise kleiner als x minus σ, wobei unter x der arithmetische Mittelwert und unter σ die Standardabweichung zu verstehen ist. Durch diese Ausgestaltung wird erreicht, dass die einzelnen Granulatkörner des Ionentauscherharzes weder über die schlitzförmigen Ausnehmungen aus der Filterpatrone austreten noch über die Rechen 8a, 8b, 8c, 8d von der einen in die andere Kammer gelangen können.

Am Oberteil 2b des Gehäuses 2 ist eine mechanischen Schnittstelle 15 zum Fixieren eines mit einer korrespondierenden Schnittstelle ausgebildeten Handgriffs (nicht dargestellt) angeordnet. Diese Schnittstelle 15 weist eine Nut auf, in welche zwei am Handgriff angeordnete, federelastisch nachgiebige Bügel mit an ihrer Vorderseite angeordneten Nocken eingreifen können. Ein solcher Handgriff kann nach dem Einsetzen der Filterpatrone 1 in den Wassertank entfernt werden. Zum Herausnehmen der Filterpatrone 1 kann der Handgriff von oben auf die mechanische Schnittstelle 15 aufgesetzt und durch einen leichten Druck nach unten daran angekoppelt werden, indem die Nocken der Bügel selbsttätig in die Nuten der mechanische Schnittstelle 15 einrasten. Danach kann die Filterpatrone 1 nach oben aus dem Wasserbehälter herausgezogen werden.

Die Filterpatrone 1 ist vorzugsweise als Wegwerfpatrone konzipiert. Sofern jedoch der Oberteil 2b lösbar mit dem Unterteil 2a verbunden ist, ist auch ein Austausch des erschöpften lonentauscherharzes denkbar, so dass die Filterpatrone 1 mehrfach verwendet werden kann. Alternativ dazu wäre auch eine Regenerierung des erschöpften lonentauscherharzes möglich.

Die erfindungsgemäss ausgebildete Filterpatrone 1 beansprucht relativ wenig Platz. Durch das Vorsehen von Schikanen der gezeigten Art muss das Wasser jedoch einen relativ langen Weg vom jeweiligen Einlass 3 durch das lonentauscherharz bis zum Auslass 4 zurücklegen. Dadurch wird die Verweilzeit des Wassers innerhalb der Filterpatrone erhöht und der Wirkungsgrad verbessert. Die geringe Bauhöhe hat den Vorteil, dass die Filterpatrone zumeist vollständig mit Wasser gefüllt ist, was gegenüber den nach dem Stand der Technik ausgebildeten Filterpatronen, welche sich teilweise über die gesamte Höhe des Wasserbehälters erstrecken, insbesondere auch in hygienischer Hinsicht Vorteile mit sich bringt. Im weiteren werden Bettbildungen und Bettverdichtungen weitgehend vermieden und das nutzbare Volumen des jeweiligen Wasserbehälters nicht nennenswert eingeschränkt. Die Filterpatrone 1 hat den weiteren Vorteil, dass sie einfach aufgebaut ist und kostengünstig hergestellt werden kann. Insbesondere auch das Einfüllen des lonentauscherharzes ist sehr einfach, da dieses vor dem Anbringen des Gehäuseoberteils 2b eingefüllt werden kann.

## Patentansprüche

1. Filterpatrone (1) zum Einsatz in Wasserbehälter von Kaffeemaschinen, mit einem mit zumindest einem Einlass (3) und einem Auslass (4) versehenen Gehäuse (2) zur Aufnahme eines Filtermediums, wobei der Auslass (4) nach unten aus dem Gehäuse (2) der Filterpatrone (1) herausgeführt ist und auf der Innenseite des Gehäuses (2) eine Vielzahl von den Wasserlauf zwischen dem Ein- und Auslass (3, 4) verlängernde Schikanen (6a, 6b; 7a, 7b, 7c, 7d) angeordnet sind, **dadurch gekennzeichnet, dass** das Gehäuse (2) einen Unterteil (2a) und einen Oberteil (2b) aufweist, wobei die Schikanen (6a, 6b; 7a, 7b, 7c, 7d) im wesentlichen vertikal verlaufen und wechselweise am Unterteil (2a) bzw. Oberteil (2b) angeordnet sind, und wobei zwischen dem Unterteil (2a) und der/den am Oberteil (2b) angeordneten Schikane(n) (6a) bzw. zwischen dem Oberteil (2b) und der/den am Unterteil (2a) angeordneten Schikane(n) (7a) jeweils ein Durchlass (13, 14) für das Wasser freibleibt, und wobei der Einlass (3) im unteren Bereich der Filterpatrone (1) angeordnet ist.

2. Filterpatrone (1) nach Anspruch 1, **dadurch gekennzeichnet, dass** am Oberteil (2b) wasserdurchlässige Rückhalteorgane (8a, 8b, 8c, 8d) angeordnet sind, welche sich bei zusammengesetztem Gehäuse (2) in Richtung der jeweiligen Oberseite der am Unterteil (2a) angeordneten Schikanen (7a, 7b, 7c, 7d) erstrecken.

3. Filterpatrone (1) nach Anspruch 1 oder 2, **dadurch gekennzeichnet, dass** die Filterpatrone (1) einen zentralen Auslass (4) aufweist und beide Stirnseiten mit zumindest je einem Einlass (3) versehen sind.

4. Filterpatrone (1) nach Anspruch 3, **dadurch gekennzeichnet, dass** zwischen dem jeweiligen Einlass (3) und dem zentralen Auslass (4) zumindest drei vertikale verlaufende Schikanen (7a, 6a, 7b; 7d, 6b, 7c) angeordnet sind.

5. Filterpatrone (1) nach einem der vorhergehenden Ansprüche, **dadurch gekennzeichnet, dass** die Seitenwände des Unterteils (2a) auf der Innenseite mit Nuten (9a, 9b) versehen sind, in weiche sich die am Oberteil (2b) angeordneten Schikanen (6a, 6b) erstrecken.

6. Filterpatrone (1) nach einem der vorhergehenden Ansprüche, **dadurch gekennzeichnet, dass** in der Filterpatrone (1) ein Filtermedium aufgenommen ist, welches sich in vertikaler Richtung in etwa bis an die Oberseite der am Unterteil (2a) angeordneten Schikanen (7a, 7b, 7c, 7d) erstreckt.

7. Filterpatrone (1) nach einem der vorhergehenden Ansprüche, **dadurch gekennzeichnet, dass** in der Filterpatrone (1) ein granulatartiges Filtermedium aufgenommen ist, und dass das Gehäuse (2) auf beiden Seiten mit einer Vielzahl von schlitzartigen Ausnehmungen zur Bildung des jeweiligen Einlasses (3) versehen ist, wobei die lichte Öffnungsweite der Ausnehmungen kleiner ist als der statistisch mittlere Aussen-Durchmesser eines einzelnen Granulatkorns, vorzugsweise kleiner als x minus σ.

8. Filterpatrone (1) nach einem der vorhergehenden Ansprüche, **dadurch gekennzeichnet, dass** oberhalb des Auslasses (4) ein poröses Filter (12) angeordnet ist.

9. Filterpatrone (1) nach einem der vorhergehenden Ansprüche, **dadurch gekennzeichnet, dass** das Gehäuse (2) auf der Oberseite mit einer mechanischen Schnittstelle (15) zum Fixieren eines mit einer korrespondierenden Schnittstelle ausgebildeten Handgriffs versehen ist.

## Claims

1. Filter cartridge (1) for use in water tanks of coffee machines, having a housing (2) which is provided with at least one inlet (3) and an outlet (4) and is intended for accommodating a filter medium, the outlet (4) being guided out of the housing (2) of the filter cartridge (1) in the downward direction, and a multiplicity of chicanes (6a, 6b; 7a, 7b, 7c, 7d) which extend the water flow path between the inlet and outlet (3, 4) being arranged on the inside of the housing (2), **characterized in that** the housing (2) has a bottom part (2a) and a top part (2b), in which case the chicanes (6a, 6b; 7a, 7b, 7c, 7d) run essentially vertically and are arranged alternately on the bottom part (2a) and top part (2b), and in each case one through-passage (13, 14) for the water remains free between the bottom part (2a) and the chicane(s) (6a) arranged on the top part (2b) and/or between the top part (2b) and the chicane(s) (7a) arranged on the bottom part (2a), and the inlet (3) is arranged in the bottom region of the filter cartridge (1).

2. Filter cartridge (1) according to Claim 1, **characterized in that** water-permeable restraining elements (8a, 8b, 8c, 8d) are arranged on the top part (2b) and, when the housing (2) is assembled, these elements extend in the direction of the respective top side of the chicanes (7a, 7b, 7c, 7d) arranged on the bottom part (2a).

3. Filter cartridge (1) according to Claim 1 or 2, **characterized in that** the filter cartridge (1) has a central outlet (4) and the two end sides are each provided with at least one inlet (3).

4. Filter cartridge (1) according to Claim 3, **characterized in that** at least three vertically running chicanes (7a, 6a, 7b; 7d, 6b, 7c) are arranged between the respective inlet (3) and the central outlet (4).

5. Filter cartridge (1) according to one of the preceding claims, **characterized in that** the side walls of the bottom part (2a) are provided internally with grooves (9a, 9b) into which the chicanes (6a, 6b) arranged on the top part (2b) extend.

6. Filter cartridge (1) according to one of the preceding claims, **characterized in that** the filter cartridge (1) accommodates a filter medium which extends in the vertical direction approximately to the top side of the chicanes (7a, 7b, 7c, 7d) arranged on the bottom part (2a).

7. Filter cartridge (1) according to one of the preceding claims, **characterized in that** the filter cartridge (1) accommodates a granular filter medium, and **in that** the housing (2) is provided, on both sides, with a multiplicity of slot-like apertures for forming the respective inlet (3), the inside width of the apertures being smaller than the statistically average external diameter of an individual granule, preferably smaller than x minus σ.

8. Filter cartridge (1) according to one of the preceding claims, **characterized in that** a porous filter (12) is arranged above the outlet (4).

9. Filter cartridge (1) according to one of the preceding claims, **characterized in that** the housing (2) is provided, on the top side, with a mechanical interface (15) for fixing a handle designed with a corresponding interface.

## Revendications

1. Cartouche filtrante (1) destinée à être utilisée dans les réservoirs d'eau de machines à café, comprenant un boîtier (2), destiné à recevoir un milieu filtrant (2), qui est pourvu d'une entrée (3) et d'une sortie (4) au moins, la sortie (4) quittant le boîtier (2) de la cartouche filtrante (1) vers le bas et plusieurs chicanes (6A, 6b ; 7b, 7c, 7d), qui prolongent le cours de l'eau entre l'entrée et la sortie (3, 4), étant disposées sur la face interne du boîtier (2), **caractérisée en ce que** le boîtier (2) présente une partie inférieure (2a) et une partie supérieure (2b), les chicanes (6a, 6b ; 7a, 7b, 7c, 7d) s'étendant essentiellement verticalement en étant disposées alternativement sur la partie inférieure (2a) à savoir sur la partie supérieure (2b), un passage (13, 14) demeurant libre pour l'eau entre la partie inférieure (2a) et la/les chicane/s (6a) disposée/s sur la partie supérieure (2b), à savoir entre la partie supérieure (2b) et la/les chicanes (7a) disposée/s sur la partie inférieure (2a), et l'entrée (3) étant disposée dans la partie inférieure de la cartouche filtrante (1).

2. Cartouche filtrante (1) suivant la revendication 1, **caractérisée en ce que** sur la partie supérieure (2b) sont disposés des éléments de retenue (8a, 8b, 8c, 8d) perméables à l'eau, qui, à boîtier (2) assemblé, s'étendent dans la direction de la face supérieure respective des chicanes (7a, 7b, 7c, 7d) disposées sur la partie inférieure (2a).

3. Cartouche filtrante (1) suivant la revendication 1 ou 2, **caractérisée en ce que** la cartouche filtrante (1) présente une sortie centrale (4) et que les deux faces sont respectivement pourvues d'une entrée (3) au moins.

4. Cartouche filtrante (1) suivant la revendication 3, **caractérisée en ce que** entre l'entrée (3) respective et la sortie centrale (4) sont disposées au moins trois chicanes (7a, 6a, 7b ; 7d, 6b, 7c), qui s'étendent verticalement.

5. Cartouche filtrante (1) suivant une des revendications précédentes, **caractérisée en ce que** sur leur face interne, les parois latérales de la partie inférieure (2a) sont pourvues de rainures (9a, 9b), dans lesquelles s'étendent les chicanes (6a, 6b) disposées sur la partie supérieure (2b).

6. Cartouche filtrante (1) suivant une des revendications précédentes, **caractérisée en ce que** la cartouche filtrante (1) contient un milieu filtrant, qui s'étend dans le sens vertical à peu près jusqu'à la face supérieure des chicanes (7a, 7b, 7c, 7d) disposées sur la partie inférieure (2a).

7. Cartouche filtrante (1) suivant une des revendications précédentes, **caractérisée en ce que** la cartouche filtrante (1) reçoit un milieu filtrant en forme de granulé et **en ce que** le boîtier (2) est sur ses deux côtés pourvu de plusieurs creux en forme de fente destinés à former l'entrée (3) respective, la largeur d'ouverture intérieure des creux étant inférieure au diamètre extérieur moyen statistique d'un seul grain du granulé, de préférence inférieure à x moins σ.

8. Cartouche filtrante (1) suivant une des revendications précédentes, **caractérisée en ce qu'**un filtre poreux (12) est disposé au-dessus de la sortie (4).

9. Cartouche filtrante (1) suivant une des revendications précédentes, **caractérisée en ce que** le boîtier (2) sur sa face supérieure est pourvu d'une interface mécanique (15) servant à la fixation d'une poignée conçue avec une interface correspondante.
